Europäisches Patentamt

European Patent Office

Office européen des brevets

(19)

(11) Numéro de publication: **0 262 039**
**A1**

## (12) DEMANDE DE BREVET EUROPEEN

(21) Numéro de dépôt: 87402093.6

(22) Date de dépôt: 18.09.87

(51) Int. Cl.⁴: **B 24 B 41/06**
**B 24 B 41/00**

(30) Priorité: 25.09.86 FR 8613383

(43) Date de publication de la demande:
30.03.88 Bulletin 88/13

(84) Etats contractants désignés:
AT BE CH DE ES GB IT LI NL SE

(71) Demandeur: UGINE ACIERS DE CHATILLON ET
GUEUGNON
La Défense 9 4, place de la Pyramide
F-92800 Puteaux (FR)

(72) Inventeur: **Nesme, Jacques**
**Les Terriers- La Rivoire-**
**43120 Monistrol-S/-Loire (FR)**

**Vialleton, Gérard**
**10, lotissement "La Prairie"**
**43240- St-Just-Malmont (FR)**

**Haennig, Robert**
**"Les Sagnes" Miribel Lanchatres**
**38450- Vif (FR)**

**Paris, Roger**
**Quartier Montjoyeux Chatenay**
**38980- Viriville (FR)**

(74) Mandataire: **Lanceplaine, Jean-Claude et al**
**CABINET LAVOIX 2, Place d'Estienne d'Orves**
**F-75441 Paris Cedex 09 (FR)**

(54) **Dispositif d'appui radial pour une pièce tournante à usiner du type à lunette, et rectifieuse équipée de ce dispositif et au besoin d'un automate de chargement/déchargement et son application notamment à l'usinage de cylindres de laminoirs.**

(57) Dispositif d'appui radial du type à lunette, pour, par exemple, une rectifieuse cylindrique extérieure (100) où la lunette (140) comprend deux bras munis de touches associées à des vérins et est agencée de manière que les touches restent appliquées contre la pièce (10) en cours d'usinage pendant toute la durée de ce dernier et cela avec une pression pratiquement constant malgré le changement de dimension de la pièce résultant de l'enlèvement de matière.

La rectifieuse est aussi équipée d'un automate (200) pour prélever les pièces à usiner sur une table de stockage (210) à l'aide de manipulateurs (223) portés par un chariot (221) mobile sur une poutre (222), les déposer sur la machine-outil et les reprendre, usinage fait, pour les replacer sur la table de stockage.

Application à la rectification de cylindres de laminoir.

FIG.1

## Description

Dispositif d'appui radial pour une pièce tournante à usiner du type à lunette, et rectifieuse équipée de ce dispositif et au besoin d'un automate de chargement/déchargement et son application notamment à l'usinage de cylindres de laminoirs.

La présente invention concerne le domaine des machines-outils et, plus particulièrement, les rectifieuses cylindriques extérieures.

La présente invention a pour objet un dispositif d'appui radial pour une pièce tournante à usiner notamment sur sa face extérieure cylindrique, du type à lunette.

La présente invention concerne aussi une rectifieuse cylindrique extérieure équipée d'un tel dispositif d'appui radial et un automate de charge-ment/déchargement destiné à l'alimenter.

Lorsqu'on utilise des machines-outils tels que des tours ou des rectifieuses cylindriques extérieures pour travailler des pièces, on sait que lorsque la pièce est d'une longueur relativement importante comparée à son diamètre et que cette dernière est par exemple maintenue entre pointe et/ou mandrin et contrepointe, les efforts d'usinage exercés sur la pièce par l'outil, la meule par exemple, la font fléchir élastiquement à la manière d'une poutre dont les deux extrémités sont encastrées. De ce fait, la flèche prise momentanément par la pièce de même que le faux-rond qui peut exister lors de sa rotation, font qu'il est difficile de donner à cette pièce sa cote théorique par suite de la déformation élastique résultant des efforts développés par l'outil. Lorsque la pièce à usiner est relativement longue, le déplacement relatif de l'outil parallèlement au banc de la machine, et donc par rapport aux extrémités qui sont soutenues de la pièce, fait que la flèche n'est pas uniforme lors du travail; cette flèche est maximale au milieu de la pièce et minimale ou pratiquement nulle au voisinage du mandrin et/ou pointe et de la contre-pointe lorsque la pièce est un cylindre homogène.

Donc, si on souhaite usiner une pièce en particulier cylindrique, des problèmes se posent pour assurer la cote théorique. C'est pourquoi, il est classique d'utiliser une lunette soit fixe, soit à suivre.

Comme on le sait, la lunette, quelle qu'elle soit sert de point d'appui pour exercer une réaction qui s'oppose et neutralise les composantes des efforts d'usinage. Suivant que la lunette est fixe, c'est à dire occupe une position déterminée, réglable, sur le banc de la machine-outil ou que la lunette est mobile et associée au trainard à l'aplomb ou pratiquement face à l'outil, on obtient une compensation partielle ou pratiquement totale des efforts d'usinage et seule la déformation élastique de la pièce, lors de l'usinage et à l'aplomb de l'outil sous l'action de ce dernier, fait que la cote théorique peut être difficile à respecter, car la lunette en supportant la pièce compense partiellement ou totalement la flexion élastique que subit la pièce à la manière d'une poutre dont les deux extrémités sont encastrées.

Toutefois, les lunettes utilisées font que leur position, transversalement à l'axe longitudinal suivant lequel la pièce est entraînée en rotation pendant l'usinage, est fixée une fois pour toute. De la sorte lors de l'usinage qui se traduit par un enlèvement de matière, la localisation transversale des points de contact des touches de la lunette avec la pièce varie puisque l'enlèvement de matière correspond à la création d'un "jeu" aussi minime soit-il, entre la surface en cours d'usinage et les touches de la lunette, comparée à la localisation de ces mêmes points de contact avec cette surface en appui sur les touches avant le début de l'usinage.

L'apparition de ce "jeu" fait que la lunette perd de son efficacité puisque la pièce en cours d'usinage est susceptible de fléchir élastiquement à la manière d'une poutre de la quantité du "jeu" créé par l'enlèvement de matière à chaque passe de l'outil du fait de l'effort de ce dernier qui applique ou repousse la pièce contre les touches qui restent fixes transversalement.

Pour éviter cette flexion élastique, suivant l'invention, on a imaginé un dispositif d'appui radial qui est agencé de manière que le contact entre la pièce et au moins une touche demeure, et cela que ce soit avant le début d'usinage, au cours de l'usinage ou à la fin de ce dernier du fait d'une compensation quasi automatique du jeu naissant de l'enlèvement de matière et cela pratiquement sans changement de pression sur la pièce à usiner.

Grâce à la solution proposée selon l'invention la prise de flèche momentanée de la pièce en cours d'usinage est totalement évitée.

L'invention trouve en particulier une application lors de la rectification des cylindres de laminoir et notamment ceux d'un laminoir Sendzimir dont la masse unitaire est d'une vingtaine de kilogrammes et qui présentent chacun une longueur voisine de 800 mm et un diamètre qui varie entre 50 et 60 mm environ à l'état usagé et à l'état neuf, respectivement.

L'invention concerne aussi un automate de chargement/déchargement pour alimenter une machine-outil équipée par exemple du dispositif d'appui radial perfectionné selon l'invention.

En effet, la mise en place et le retrait des pièces à usiner/usinées sur la machine-outil est une opération longue, fastidieuse et pénible. Pour remé dier à ces inconvénients, on utilise un automate qui prélève les pièces à usiner en attente sur un plan de stockage, les dépose sur la machine où elles sont traitées puis, usinage fait, les enlève de la machine et les redépose sur le plan de stockage.

Les opérations de manipulation, à l'exception de celles concernant la première et de la dernière pièce, s'effectuent en temps masqué, c'est à dire que le transport des pièces, leur présentation et leur retrait de la machine-outil se font pendant l'usinage et le contrôle de la pièce placée sur la machine.

Pour assurer un bon fonctionnement de la machine, de son dispositif d'appui radial et de l'automate, on utilise un calculateur programmable qui permet de commander et de synchroniser en temps réel le fonctionnement de l'ensemble.

L'invention a pour objet un dispositif d'appui radial pour une pièce tournante à usiner notamment sur sa surface extérieure cylindrique, comprenant une lunette présentant un corps, conformément à l'invention, ledit corps comprend un bras monté mobile sur le corps de ladite lunette et qui porte une touche destinée à venir en appui sur cette surface de la pièce à usiner, associé à ce bras un vérin fluidique pour appliquer cette touche contre cette surface de la pièce, un accumulateur de fluide qui est relié au moins à la chambre active du vérin et qui présente un volume notablement plus grand que celui de cette dernière, et un générateur de pression relié au circuit fluidique accumulateur-vérin de telle manière qu'une pression déterminée établie et régnant dans le circuit fluidique accumulateur-vérin ne change pratiquement pas lors du déplacement de cette touche à la suite de l'enlèvement de matière de cette surface de la pièce contre laquelle porte cette touche.

Conformément à l'invention, ce dispositif d'appui radial peut avantageusement comprendre une lunette constituée d'un corps sur lequel sont montés mobiles au moins deux bras qui portent chacun une touche destinée à venir en appui sur cette face de la pièce à usiner sous l'action de vérins fluidiques qui agissent respectivement sur ces bras.

Conformément à l'invention, le volume de fluide dans ce circuit accumulateur-vérin peut avantageusement être au moins égal à mille fois la variation du volume de cette chambre active résultant du déplacement de ces touches à la suite de l'enlèvement de matière de cette surface de la pièce à usiner.

La présente invention s'applique à une rectifieuse cylindrique extérieure comprenant un banc équipé d'une poupée fixe porte pièce ou d'entraînement munie d'un mandrin et d'une broche dont le nez porte une pointe, d'une poupée mobile munie d'une contre-pointe, un porte-meule mobile relativement au banc et muni d'une meule où l'axe pointe/contre-pointe définit l'axe géométrique d'usinage de la pièce à usiner et qui est équipée d'un dispositif d'appui radial selon l'invention.

Conformément à l'invention, la machine du type de celui que l'on vient d'indiquer, comporte un automate de chargement/déchargement comprenant une surface de stockage pour recevoir les pièces à usiner, un transporteur constitué d'un chariot monté mobile sur une poutre sur laquelle il se déplace en translation et portant deux manipulateurs à vérin mobiles axialement qui sont montés inclinés relativement l'un à l'autre de manière qu'en position de chargement/déchargement de la machine leurs axes respectifs passent par l'axe géométrique pointe/contre-pointe et qui sont munis de mors préhensibles autocentreurs oscillants en forme de Vé.

L'invention sera mieux comprise à la lecture de la description qui suit, donnée uniquement à titre d'exemple, et faite en se référant au dessin annexé, sur lequel :

- la Fig. 1 est une vue de dessus schématique de l'ensemble constitué d'une rectifieuse à laquelle sont associés un dispositif et un automate, selon l'invention;

- la Fig. 2 est une vue, analogue de celle de la Fig. 1, de l'ensemble mais de côté;

- la Fig. 3 est une vue analogue à celle de la Fig. 1 mais de face;

- la Fig. 4 est une vue de détail, à plus grande échelle et partiellement en coupe, d'une partie du dispositif selon l'invention;

- la Fig. 5 est une vue de détail schématique des mors du manipulateur de l'automate selon l'invention;

- les Fig. 6A à 6E illustrent différentes phases du fonctionnement de l'automate; et

- la Fig. 7 représente un schéma hydraulique associé au dispositif.

Une grande partie des éléments constitutifs de l'invention étant classiques dans le secteur technique duquel elle relève, on ne décrira ceux-ci que très sommairement; on n'insistera que sur les points particuliers qui concernent directement ou indirectement l'invention

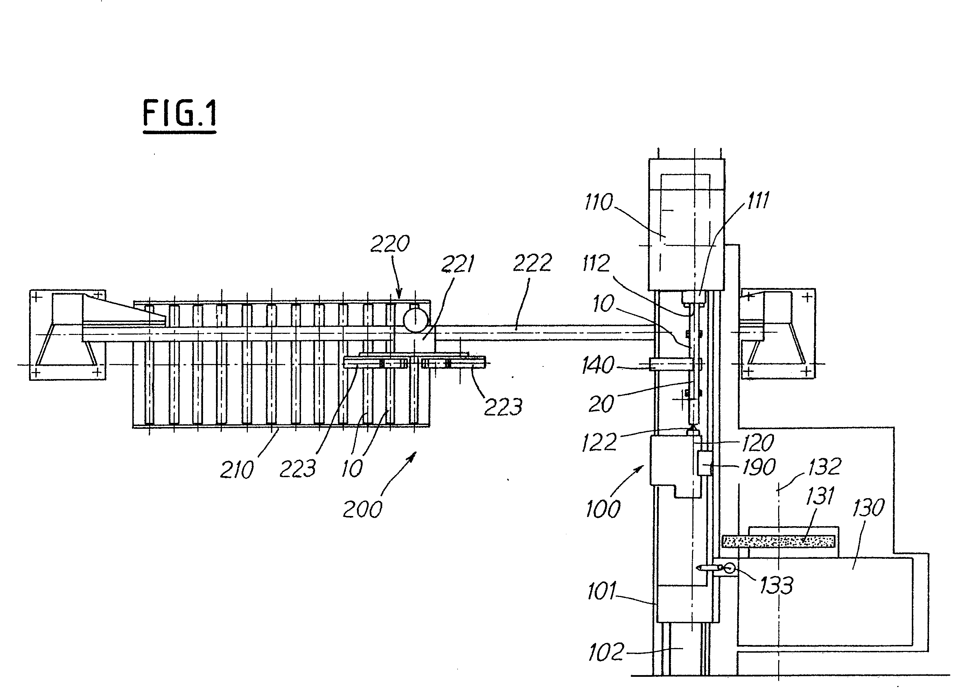

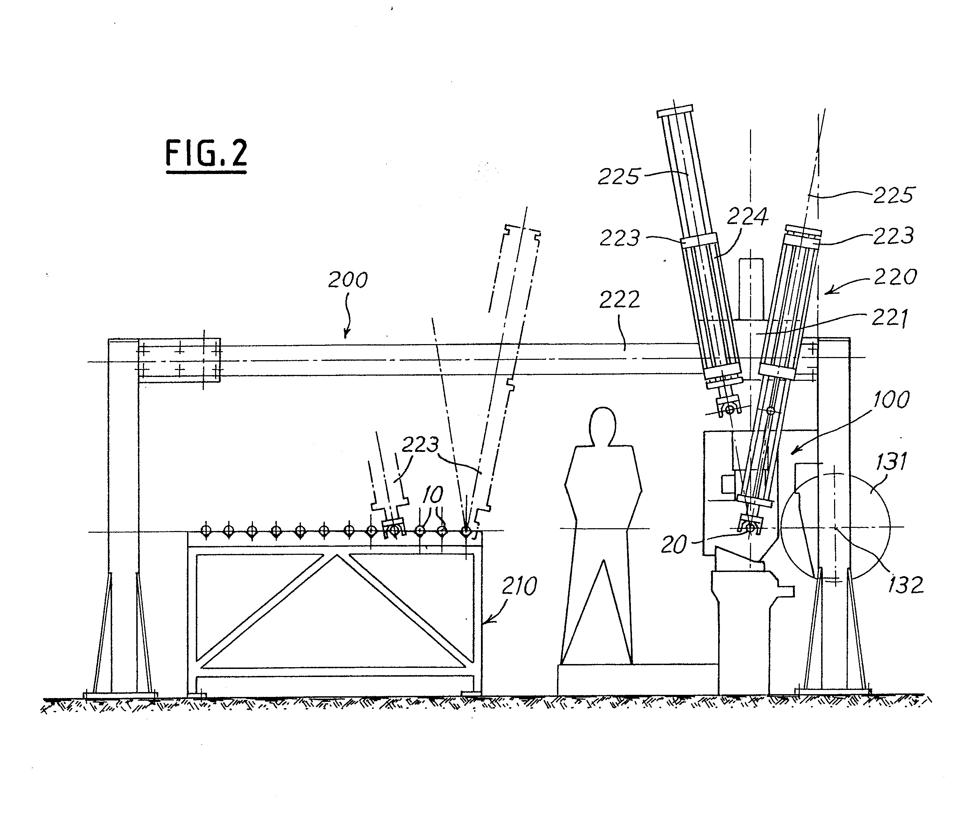

Comme on le voit en particulier sur les Fig. 1,2 et 3, on a dessiné une rectifieuse 100 cylindrique extérieure dont le banc 101 est équipé d'une poupée fixe d'entraînement ou porte pièce 110 munie d'un mandrin 111 et d'une broche, non représentée, dont le nez porte une pointe 112 ; le banc de cette rectifieuse est aussi équipé d'une poupée mobile 120 munie d'une contre-pointe 122. Cette rectifieuse comprend encore un chariot porte-meule 130 sur lequel est montée une meule 131 d'axe 132 et auquel est associé un palpeur 133 sur lequel on reviendra par la suite. Le banc est mobile en translation sur le socle 102 de la machine-outil comme cela est classique et ressort de la suite.

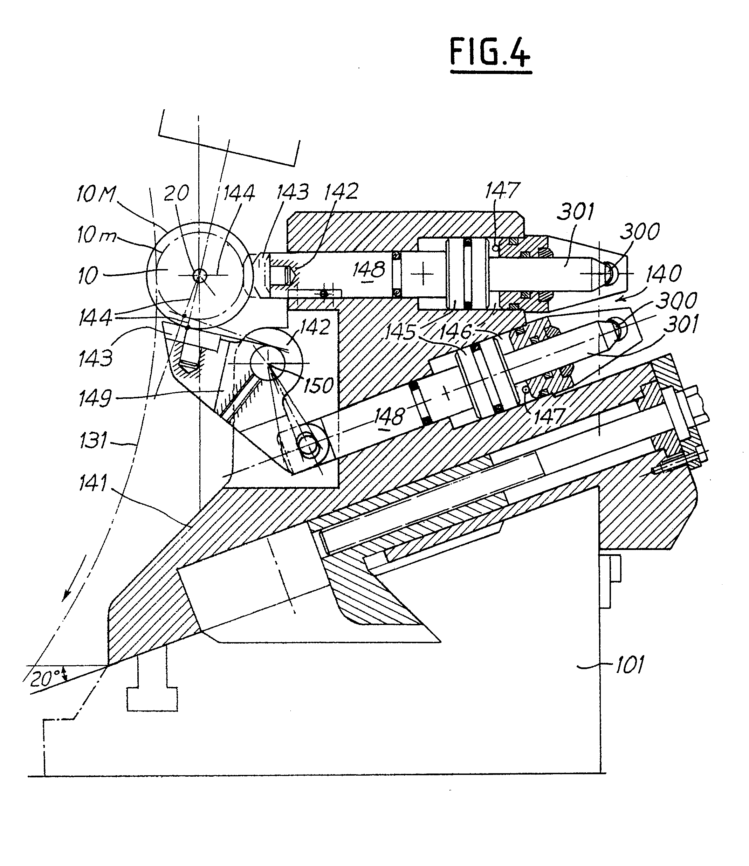

A cette rectifieuse est associée un dispositif à lunette 140 selon l'invention dont le détail apparaît sur la Fig. 4. Comme on le voit, cette lunette comprend un corps 141, montés mobiles sur ce corps au moins deux bras 142 qui portent chacun, à une extrémité libre, une touche 143. Les touches sont disposées de manière que la normale 144 à leurs points de contact respectifs avec une pièce 10, à rectifier ou en cours d'usinage, passe pratiquement par l'axe géométrique 20 de rotation de cette dernière; cet axe de rotation 20 est défini par les pointe et contre-pointe 112 et 122 respectivement.

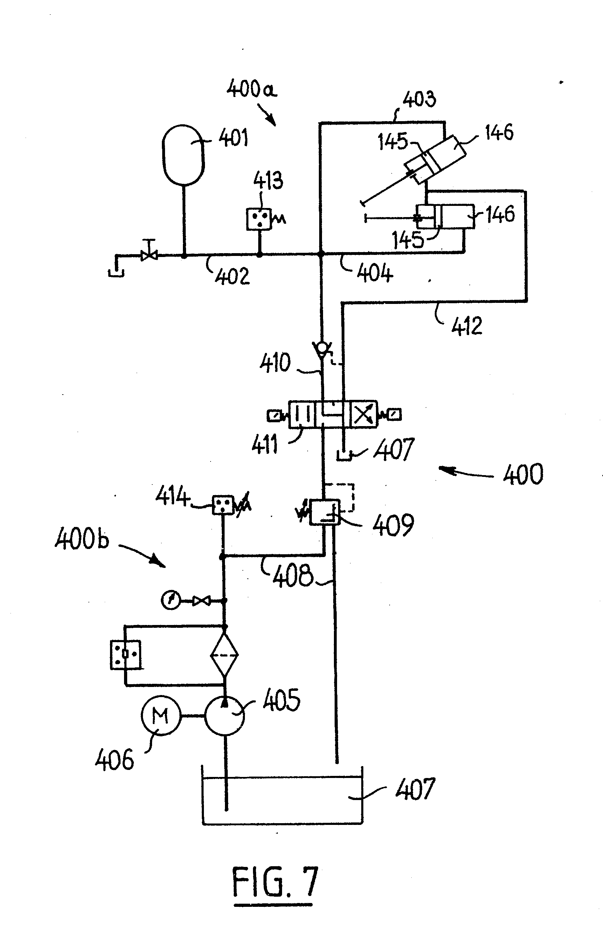

A chacun de ces bras, est associé, relié à son autre extrémité, un piston 145 d'un vérin fluidique par exemple hydraulique à double effet, dont la chambre ou le cylindre 146, où s'exerce une pression du fluide, est relié par une conduite, dont seul l'orifice 147 est représenté, à un accumulateur de fluide. Le circuit fluide 400 que constitue le cylindre, l'accumulateur et la conduite peut être isolé d'un générateur de pression à l'aide d'une vanne. Le circuit hydraulique composé des vérins, de l'accumulateur de fluide et du générateur de pression sera décrit ultérieurement à propos de la Fig. 7.

Comme on le voit en examinant la Fig. 4, l'un des leviers est horizontal et fait corps avec la tige 148 de l'un des pistons. Ce levier horizontal est calé en hauteur de manière que son axe longitudinal intercepte l'axe de rotation 20 de la pièce sur la machine et passe aussi par l'axe 132 de la meule, non représenté sur cette figure.

L'autre levier 142 se présente à la manière d'un renvoi de sonnette 149 articulé en son milieu sur un axe 150 de manière à pouvoir osciller. Comme illustré, l'une des jambes de ce levier porte une touche 143 alors que son autre jambe est reliée, par exemple par une liaison à fente et cheville, à la tige 148 du piston 145.

Comme on le voit sur cette figure, le bras est calé de manière que son point de contact avec la pièce sur la machine, usinée ou en cours d'usinage, présente une normale 144 qui passe par l'axe de rotation 20 de la pièce.

Les positions relatives des deux bras et de leurs touches sont choisies de manière que la résultante des efforts d'usinage produits par la meule 131, passe pratiquement par le plan bissecteur du dièdre dont l'arête est l'axe géométrique 20 de rotation de la pièce défini par les pointe et contre-pointe, et dont les faces passent chacune par l'un des points de contact des touches avec la pièce sur la machine.

On a dessiné sur la Fig. 4, deux pièces 10M et 10m dont les diamètres propres correspondent, respectivement, au diamètre maximal et minimal, fortement exagéré, d'une pièce avant et après usinage. En se reportant à ce dessin, on voit que si, au moment du montage de la pièce à usiner sur la machine, les touches des bras de la lunette sont appliquées contre sa surface extérieure 10M et que celles-ci sont calées mécaniquement dans cette position, les touches ne seront plus au contact de la surface extérieure 10m de la pièce à la fin de l'usinage de cette dernière du fait de l'enlèvement de matière, si les bras sont immobilisés dans la position où ils ont été calés. On comprend donc que, sous les efforts développés par la meule, la pièce fléchisse élastiquement momentanément de cette quantité pour venir prendre appui contre les touches. L'importance de cette flexion étant bien sûr fonction de la quantité de matière enlevée et aussi de la position longitudinale de la meule ou de l'outil, relativement aux pointe et contre-pointe ainsi que de la nature de la pièce elle-même.

Lorsqu'on souhaite rectifier des cylindres de laminoir Senzimir dont la longueur est voisine de 800 mm et dont la masse est proche de 20 kg, on comprend que ceci pose un problème si l'on sait qu'à chaque usinage la quantité de matière à enlever est de l'ordre de quelques dixièmes de millimètre et qu'on veut réaliser cette opération avec des tolérances très serrées, par exemple avec une tolérance de ± 0,005 mm sur le diamètre et une tolérance sur le parallélisme de ± 0,005 mm au diamètre sur la longueur du cylindre, et ceci avec une rugosité maximale de cinq microinches.

L'invention vise donc à compenser automatiquement le "jeu" qui se produit du fait de l'usinage par enlèvement de matière et pour ce faire les touches de la lunette qui sont au contact de la pièce sur la machine sont associées à des pistons.

Dès que le cylindre à rectifier est monté sur la machine-outil et placé entre pointe et contre-pointe, les touches 143 sont appliquées, comme représenté sur la Fig. 4, contre la pièce et grâce au générateur de pression on envoie dans le cylindre ou chambre active 146 du piston un fluide sous une pression choisie de manière à exercer l'effort souhaité sur la pièce en vue de contrebalancer les efforts qui résulteront de l'usinage. Le choix de la pression est liée notamment aux caractéreistiques de la machine-outil, à la nature de la pièce à travailler, aux modes et conditions opératoires, aux tolérances,...

Ceci étant fait, on isole le fluide grâce à la vanne indiquée précédemment, par exemple une électrovanne. Le circuit que constitue alors les deux cylindres 147 des vérins, l'accumulateur de fluide mentionné auparavant et la conduite dont seuls les orifices qui débouchent dans les cylindres sont représentés, se trouve isolé.

Cet accumulateur de fluide présente un très grand volume relativement à celui des cylindres. Du fait du relativement petit déplacement que subissent les touches et donc les tiges des pistons, on peut considérer que le volume du cylindre ou des cylindres ne varie pas ou pratiquement pas; cette variation de volume comparée au volume important de l'accumulateur peut être considérée comme du second ordre et comme on le sait, dans ce cas, la pression choisie exercée pourra être considérée comme constante. En effet, pour une température déterminée, on peut considérer que la relation

$$\left|\frac{dV}{V}\right| = \left|\frac{dP}{P}\right|$$

est satisfaite.

La régularité de la force exercée sur la pièce montée sur la machine, qui a été choisie pour contrebalancer les efforts d'usinage qui eux changent peu, font que l'on peut obtenir la précision d'usinage souhaitée, ce qui était hors de portée avec les lunettes précédemment connues.

Pour des raisons de frottement et de résistance à l'usure, on choisit des touches 143 rapportées faites en une matière plastique à base de polyamide connus sous la dénomination commerciale "Ertalon".

Dans ce mode de réalisation, la lunette est supposée solidaire du banc mais il est clair qu'elle peut aussi être montée sur le porte-meule 130, ou le trainard ou toute autre partie appropriée de manière à se déplacer avec lui et se trouver en permanence pratiquement à l'aplomb de la meule au cours du travail de la machine-outil. Dans ce mode de réalisation on utilise une seule lunette mais il est clair qu'un plus grand nombre de lunettes selon l'invention peut servir suivant les impératifs à satisfaire.

Pour s'affranchir du faux-rond qui pourrait résulter d'un défaut de serrage de la pièce sur la machine ou d'une anomalie de cette dernière, et qui pourrait nuire à la qualité et à la précision du travail recherchées, on utilise un mandrin 111 monté "flottant" de manière que le défaut éventuel de centrage ou d'entraînement de ce dernier ne se répercute pas sur la pièce qu'il fait tourner. Ce type de mandrin "flottant" est bien connu dans la technique.

Comme on le sait, lors des opérations de rectification, la meule s'use et a tendance à perdre son profil et à s'encrasser, c'est pourquoi il est nécessaire de la dresser. Pour faire cette opération, on dispose sur la poupée mobile 120 un diamant 190. De la sorte, en surveillant le courant d'alimentation du moteur entraînant la meule, il est possible de procéder au diamantage de la meule, que ce soit à l'occasion des passes d'ébauche ou des passes de finition, à l'aller et/au retour.

Afin de pouvoir contrôler les pièces avant et après usinage, on équipe la machine d'un palpeur 133 pour mesurer leur diamètre.

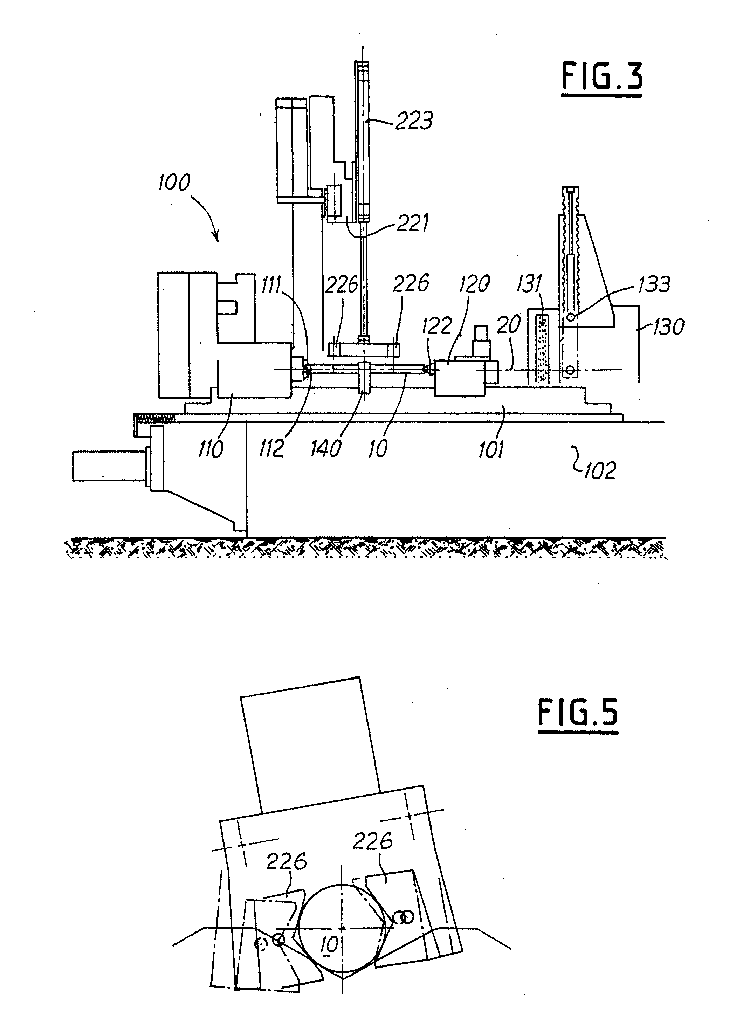

Comme on le voit sur les Fig. 1 et 3, le palpeur est monté sur le porte-meule par l'intermédiaire d'un bâti triangulaire sur lequel est fixée une commande par exemple un vérin ou analogue. Une telle commande porte le palpeur de manière à pouvoir le déplacer entre une position active basse de mesure et une position inactive haute d'escamotage. Cette commande est protégée par un manchon souple déformable en accordéon. Le palpeur présente un doigt de mesure associé à un instrument de mesure des déplacements ou longueur approprié et de la précision requise pour les mesures à faire; cet instrument peut être analogique à cadran ou digital à affichage. Tout ceci étant classique et fait d'éléments du commerce on ne s'y arrêtera pas plus longtemps.

Le fonctionnement de la rectifieuse équipée de la lunette selon l'invention est le suivant.

On prend la cote du diamètre du cylindre à rectifier et le spécialiste, après examen visuel de son état superficiel, et en particulier évaluation du nombre des craquelures et des fissures et de leur importance, détermine la quantité de matière à enlever pour régénérer le cylindre. On connait donc après cette prise de cote initiale, la cote du diamètre final à obtenir pour débarasser le cylindre de laminoir usagé de ses défauts et ainsi le rénover. La référence du cylindre à usiner, sa cote initiale, sa cote finale à atteindre sont par exemple introduites dans la mémoire d'un calculateur programmable à l'aide du clavier d'un pupitre de commande à la disposition du compagnon et le cycle de fonctionnement de la machine est lancé.

Dans le calculateur on a aussi préalablement introduit une fois pour toutes les paramètres concernant le courant d'alimentation de la meule. De cette manière, le cycle d'usinage complet peut se dérouler sous la dépendance du calculateur.

A la fin de l'usinage, après que le banc avec tout ce qu'il porte ait fait un certain nombre de translation alternatives parallèlement à l'axe 20 en défilant devant le porte-meule 130, on compare la cote réelle prise par la pièce avec la cote théorique affichée en tenant compte de la tolérance admise, par exemple dans ce cas de 0,05 mm en plus ou en moins.

On décrira maintenant l'automate de chargement/ déchargement et son mode opératoire.

Comme on le voit en particulier sur les Fig. 1,2 et 3, l'automate de chargement/déchargement 200 comprend une surface ou table de stockage 210 pour recevoir les pièces 10 à usiner et les pièces usinées, par exemple par rectification. Les pièces reposent dans des berceaux convenables, de géométrie appropriée par exemple des Vé. Les surfaces des berceaux portent, s'il y a lieu, un revêtement de manière que les surfaces usinées des pièces ne soient pas détériorées lorsque ces dernières y sont déposées.

Un transporteur 220 constitué d'un chariot 221 se déplace sur une poutre 222 horizontale. Ce chariot, par exemple automoteur, porte deux manipulateurs 223 commandés par des vérins 224 de manière à pouvoir se déplacer suivant leur axe respectif 225. Comme on le voit, ces manipulateurs sont montés inclinés relativement l'un à l'autre, pratiquement symétriquement sur la verticale, de manière qu'en position de chargement ou déchargement de la machine-outil, leurs axes respectifs 225 passent par l'axe géométrique 20 défini par les pointe et contre-pointe.

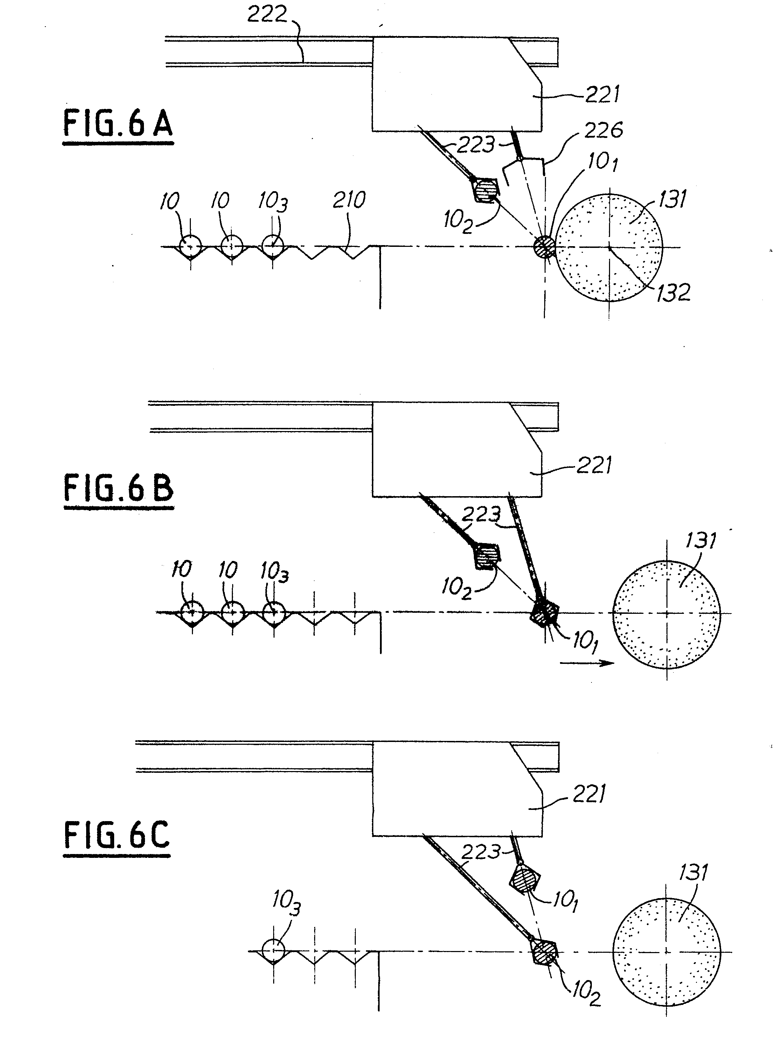

Comme on le voit plus en détail sur la Fig. 5, l'extrémité inférieure libre des manipulateurs est munie d'au moins un couple de mors 226 préhensibles autocentreurs montés oscillants en vis à vis. Ces mors, en forme de Vé, portés par des axes figurés schématiquement opèrent à la manière de pinces pour saisir ou libérer les pièces à manipuler. Le rapprochement et/ou l'éloignement des mors est assuré par un moteur ou un vérin particulier, non représenté, ou par le vérin 224 auquel est associée une timonerie appropriée, non représentée; dans ce dernier cas l'ouverture ou la fermeture des mors se fait automatiquement au début ou à la fin de la course basse, lorsque les mors s'approchent ou s'éloignent de l'axe 20, respectivement.

L'ouverture et la fermeture des mors pour la préhension et la libération des cylindres de laminoir sont des opérations qui sont commandées, comme il est bien connu, selon toute technique appropriée convenable. Les mors sont autocentreurs de manière à pouvoir compenser automatiquement tout défaut de centrage ou d'alignement par rapport aux pièces à prendre ou à laisser et, aussi, de manière à pouvoir tenir compte des variations de diamètre des pièces fonction de leur état propre. Le chariot automoteur est équipé d'un moteur par exemple électrique ou hydraulique de manière à pouvoir se déplacer sur la poutre, comme il est connu; ce moteur entraîne un galet de friction ou un pignon qui engrène sur une crémaillère.

On utilise deux manipulateurs de manière que l'automate puisse fonctionner en temps masqué à l'exception des première et dernière pièces déposées et enlevées sur la machine-outil.

Des phases du fonctionnement de l'automate de chargement/déchargement de la machine-outil, par exemple la rectifieuse, selon l'invention sont illustrées sur les Fig. 6A à 6E.

On suppose que les cylindres de laminoir à rectifier ont été déposés dans leur berceau sur la table de stockage 210, qu'un cylindre $10_1$ a été placé par l'un des manipulateurs sur la rectifieuse et est en cours de rectification et qu'un autre cylindre $10_2$ a été prélevé et est en attente de rectification, retenu dans les mors de l'un des manipulateurs en position haute. L'autre manipulateur est aussi en position haute, mors ouverts, vie, en attente.

L'automate de chargement se trouve alors dans la position schématisée sur la Fig. 6A.

A la fin de la rectification, la meule 131 recule perpendiculairement à l'axe 20 et s'éloigne de la pièce usinée $10_1$ et l'un des manipulateurs, celui vide en attente, descend pour venir saisir le cylindre $10_1$ sur la rectifieuse. Les mandrins, pointe et contre-pointe se déplacent comme indiqué par la suite à titre d'exemple pour libérer le cylindre rectifié $10_1$ qui ne se trouve plus soutenu que par les mors du manipulateur qui se sont refermés sur lui. L'automate se trouve alors dans la position représentée sur la Fig. 6B.

Le premier manipulateur qui enserre le cylindre rectifié $10_1$ s'élève alors que l'autre manipulateur descend pour présenter le cylindre $10_2$ à rectifier sur la machine-outil. Cette phase est illustrée sur la Fig. 6C. La pièce à usiner toujours prisonnière des mors, pointe, contre-pointe et mandarin se mettent en place comme on l'expose par la suite à titre d'exemple pour que la pièce $10_2$ soit prise en charge par la machine-outil. Les mors du manipulateur libèrent alors le cylindre $10_2$ à rectifier et le manipulateur vide s'élève. Le chariot occupe alors une position identique à celle dessinée sur la Fig. 6A, à la différence près que les manipulateurs plein et vide, respectivement, ont été inversés. En même temps que la meule se déplace perpendiculairement à l'axe 20 et s'approche de la pièce à rectifer $10_2$, le chariot 221 se déplace en direction de la table 210.

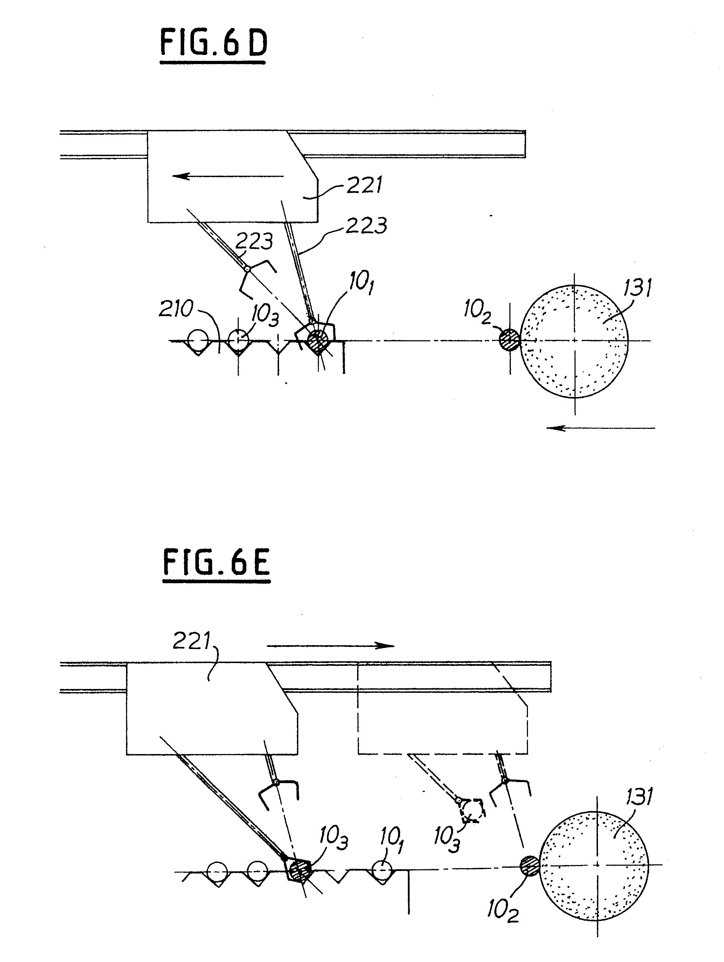

Le chariot, qui s'est déplacé vers la gauche, est au-dessus de la table 210, le premier manipulateur descend, dépose le cylindre rectifié $10_1$. Ceci est illustré sur la Fig. 6D. Le manipulateur en question remonte et l'autre manipulateur descend et vient alors se saisir du cylindre $10_3$ suivant à rectifier. Le manipulateur garni remonte et le chariot reprend après sa position d'attente dessinée en trait discontinu à proximité de la rectifieuse; ceci est illustré sur la Fig. 6E et ainsi de suite jusqu'à la fin de l'usinage du dernier cylindre présent sur la table. Le fonctionnement de l'automate est aussi commandé par le calculateur.

De la sorte, les seules opérations à assurer par un compagnon sont la dépose des cylindres à usiner sur la table de stockage 210. l'expertise visuelle des cylindres, la mesure de leur diamètre et la détermination de la valeur du diamètre qu'ils devront avoir après usinage pour être rénovés. Les informations relatives à l'emplacement qu'occupe un cylindre particulier sur la table, c'est-à-dire son adresse, et aux valeurs de son diamètre avant usinage et de son diamètre après usinage sont affichées dans la mémoire du calculateur à l'aide du clavier du pupitre à la disposition de l'opérateur.

Cette intervention préalable de saisie d'informations se répète pour chacun des douze cylindres si la table est prévue pour en recevoir une douzaine. Ceci étant fait, l'opérateur peut déclencher un cycle de fontionnement.

On décrira maintenant la totalité d'un cycle de fonctionnement de la rectifieuse avec sa lunette et son automate selon l'invention.

La première pièce est présentée entre pointe et contre-pointe par un manipulateur, la contre-pointe se rapproche de la pièce à rectifier, la rencontre et la pousse contre la pointe ; les pointe et contre-pointe ainsi resserrées maintiennent la pièce à rectifier qu'elles enserrent et le mandrin sert ses mors afin qu'il puisse entraîner la pièce à rectifier au démarrage du cycle. Puis les touches de la lunette sonta mises au contact de la pièce et appliquées contre celle-ci avec la pression déterminée choisie; le palpeur 133 contrôle alors le diamètre effectif de la pièce placée sur la rectifieuse et le calculateur compare cette valeur à la valeur qui a été affichée pour cette pièce. Si la différence entre le diamètre réel et le diamètre affiché par l'opérateur est supérieure à une valeur choisie fixée à 0,05 mm, par exemple, il y a blocage du cycle de fonctionnement et signalisation d'une anomalie. Cette anomalie peut résulter soit d'une erreur d'indexation, des coordonnées de son emplacement sur la table du cylindre, soit du fait que la mesure manuelle a été prise en un autre point sur la longueur du cylindre, différent de celui où opère le palpeur. Pour lever l'incertitude, une deuxième mesure est automatiquement faite en un autre endroit. Si la différence des cotes des diamètres affiché et mesuré est inférieure à la valeur que l'on s'est fixée il n'y a pas lieu de reprendre une autre mesure et le cycle de travail peut être lancé. Autrement, il y a arrêt du cycle de fonctionnement de la machine et appel à l'opérateur qui doit intervenir.

Ensuite, cette vérification initiale étant faite, le calculateur associé à la machine qui a été programmé de manière à déterminer le nombre de passes d'ébauche et de finition, de même que la prise de pas, lance le cycle d'usinage.

On effectue alors un décrassage, puis un diamantage de la meule et un ébauchage suivi d'un usinage de finition. Les opérations de diamantage étant, comme on l'a indiqué, aussi sous la dépendance du calculateur dans la mémoire duquel on a introduit les valeurs du courant d'alimentation de la meule.

A la fin de cycle d'usinage, la pièce est saisie par un des manipulateurs, les touches de la lunette sont escamotées, le mandrin est desserré, la contre-pointe recule et s'éloigne de la pièce sans que le banc se déplace en sens opposé pour séparer la pointe de la pièce rectifiée et cette dernière est dégagée de la rectifieuse. L'autre manipulateur vient mettre en place sur la machine-outil la pièce suivante à usiner qu'il portait en attente et le manipulateur garni de la pièce rénovée va déposer cette dernière sur la table et prendre la pièce suivante à travailler. Ce cycle se répète ainsi sans aucune intervention humaine jusqu'à ce que toutes les pièces en attente sur la table de stockage aient été usinées et un nouveau cycle complet se reproduit.

On ne s'étendra pas plus longuement sur la manière dont pointe et contre-pointe se rapprochent et se séparent axialement, suivant l'axe 20 qu'elles définissent, ni sur les déplacements d'ensemble de celles-ci aussi suivant cet axe pour retenir ou libérer, respectivement, une pièce. Il s'agit là de déplacements classiques que l'on obtient de toute manière courante appropriée en agissant sur l'une ou l'autre, ou les deux, des pointe et contre-pointe et, s'il y a lieu, aussi sur l'une ou l'autre, ou les deux, des poupées et au besoin sur le banc.

Pour remédier à tout défaut éventuel de centrage ou d'alignement de la pièce à usiner portée par un manipulateur et présentée à la machine-outil, on monte "flottant" les manipulateurs 223 sur le chariot 221. On s'affranchit ainsi d'un manque de précision éventuel dans le positionnement du chariot et/ou des manipulateurs. Une telle solution permet d'utiliser des tolérances moins strictes et donc de limiter les coûts des matériels et/ou de leurs commandes.

Enfin, pour mémoire, on indiquera que cet ensemble est équipé de capteurs de position et/ou de déplacement et/ou de proximité, si nécessaire; ces capteurs, choisis en rapport avec les fonctions qu'ils doivent assurer, sont placés aux endroits appropriés et, si besoin, reliés au calculateur qui assure la maîtrise de l'ensemble. On a représenté sur la Fig. 4, de tels capteurs 300 associés à une queue 301 solidaire de la tige 148 de piston. Ceci est de technique courante.

On a expliqué qu'un calculateur pilotait le fonctionnement de l'ensemble. Les techniques de programmation des calculateurs et d'élaboration des instructions sont biens connues des spécialistes c'est pourquoi on ne s'y étendra pas plus longuement; des calculateurs et les programmes correspondants pour ce type d'intervention font appel à des connaissances classiques courantes utilisées par les spécialistes.

En se reportant maintenant à la Fig. 7, on décrira le circuit fluidique repéré d'une manière générale par la référence 400.

Ce circuit 400 par exemple hydraulique comprend, dans l'exemple, un circuit fluide accumulateur 400a qui est constitué par les chambres actives ou cylindres 146 des vérins hydrauliques décrits auparavant ainsi que par un accumulateur de fluide 401 auxquels sont reliées, en parallèles ces chambres actives 146 par l'intermédiaire d'une conduite 402 qui est raccordée à l'accumulateur de fluide 401 et qui se divise en deux conduites 403 et 404, respectivement, reliées aux chambres actives 146.

Ce circuit comprend, en outre, un générateur de pression 400b qui est constitué d'une pompe hydraulique 405 entraînée par un moteur électrique 406. Cette pompe 405 est montée en circuit fermé sur un réservoir 407 par l'intermédiaire d'une conduite 408 sur laquelle est branché un présostat réglable du circuit accumulateur 400a par l'intermédiaire d'une conduite 410 sur laquelle est montée une électrovanne d'isolement 411; les autres chambres de ces vérins hydrauliques opposées à leurs chambres actives 146, sont reliées au réservoir 407 grâce à une conduite 412 sur laquelle est aussi branchée l'électrovanne 411.

En outre, sur la conduite 402 du circuit accumulateur 400a est prévu un manostat 413 pour la mesure de la pression régnant dans le circuit et dans la conduite 408 du générateur de pression 400b; en sortie de pompe 405, est aussi prévu un manostat 414 qui permet de mesurer la pression à la sortie de la pompe 405.

Dans le processus décrit précédemment, pour atteindre une pression déterminée dans les chambres actives 146 des vérins hydrauliques, à laquelle est associée une pression déterminée des touches 143 sur la pièce à usiner 10, on ouvre l'électrovanne 411 de la conduite 410 et on actionne la pompe 405 en mettant en marche le moteur électrique 406. Par l'intermédiaire du présostat 409 préréglé, la pompe 405 envoie du fluide au circuit accumulateur 400a composé des chambres actives 146, de l'accumulateur de fluide 401 et des conduites 402, 403 et 404. Lorsque la pression désirée, détectée par le manostat 413, est atteinte, on ferme l'électrovanne 411 de manière à clore la conduite 410 et, ainsi, isoler le circuit accumulateur 400a; on arrête ensuite la pompe 405 en débranchant le moteur 406.

Pour faire chuter la pression du circuit accumulateur 400a et, ainsi, faire reculer les touches 143 pour les éloigner de la pièce usinée 10, on actionne l'électrovanne 411 pour ouvrir la conduite 412 ainsi que celle de la pompe 405 qui envoie, par l'intermédiaire du présostat 409 et de la conduite 412, du fluide aux chambres des vérins opposées à leurs chambres actives 146; le circuit accumulateur 400a se vide dans le réservoir 407 par la conduite 410 au travers de l'électrovanne 411.

L'invention confère des avantages indéniables. Elle augmente notablement la capacité de la machine-outil et améliore grandement la qualité de l'usinage de part la connaissance précise des gammes qui permet la répétitivité. En outre, des gains sont dégagés à l'utilisation des pièces usinées, des cy lindres de laminoir rectifiés ; en effet, on est ainsi assuré que la prise de métal sera toujours suffisante pour éliminer la couche usagée du cylindre "fatigué" alors qu'auparavant le compagnon pouvait seulement donner un aspect superficiel satisfaisant visuellement (blanchissage) tout en laissant subsister des défauts sous-jacents, telles des criques, ce qui occasionnait un redémontage du cylindre du laminoir pour en enlever un tel cylindre à l'apparition de défaut de fonctionnement dès le début de la mise en marche.

### Revendications

1. Dispositif d'appui radial pour une pièce tournante à usiner notamment sur sa surface extérieure cylindrique comprenant une lunette (140) présentant un corps (141), caractérisé en ce qu'il comprend :

- au moins un bras (142) qui est monté mobile sur le corps (141) de ladite lunette et qui porte une touche (143) destinée à venir en appui sur cette surface de la pièce à usiner (10),

- associé à ce bras im vérin fluidique (145, 146) pour appliquer cette touche contre cette surface de la pièce,

- un accumulateur de fluide (401) qui est relié au moins à la chambre active (146) de ce vérin et qui présente un volume notablement plus grand que celui de cette dernière

- et un générateur de pression (400b) relié au circuit fluidique (400a) accumulateur (401)-vérin (145, 146), de telle manière qu'une pression déterminée établie et régnant dans le circuit (400a) accumulateur-vérin ne change pratiquement pas lors du déplacement de cette touche (143) à la suite de l'enlèvement de matière de cette surface de la pièce contre laquelle porte cette touche.

2. Dispositif selon la revendication 1, caractérisé en ce que cette lunette (140) comprend un corps (141) sur lequel sont montés mobiles au moins deux bras (142) qui portent chacun une touche (143) destinée à venir en appui sur cette surface de la pièce à usiner sous l'action de vérins fluidiques (145, 146) qui agissent respectivement sur ces bras.

3. Dispositif selon la revendication 1 ou 2, caractérisé par le fait que le volume de fluide du circuit (400a) accumulateur-vérin est au moins égal à mille fois la variation de volume de la chambre active (146) du résultant du déplacement de ces touches (143) à la suite de l'enlèvement de matière de cette surface de la pièce à usiner.

4. Dispositif selon l'une quelconque des revendications 1 à 3, caractérisé en ce que la normale (144) au point de contact de cette touche (143) avec la pièce à usiner (10), passe pratiquement par l'axe géométrique d'usinage (20) de cette dernière.

5. Dispositif selon l'une quelconque des revendications précédentes, caractérisé en ce que l'un au moins des bras (142) est constitué par la tige (148) du piston du vérin associé et en ce que la touche (143) est centrée sur l'axe longitudinal de cette tige.

6. Dispositif selon l'une quelconque des revendications précédentes, caractérisé en ce que l'un au moins des bras est constitué par un levier (149) en renvoi de sonnette qui est articulé en son milieu sur un axe (150) parallèle à l'axe géométrique d'usinage (20) et dont l'une des extrémités porte la touche (143) et dont l'autre des extrémités est reliée à la tige (148) de piston du vérin associé

7. Dispositif selon l'une quelconque des revendications précédentes, caractérisé en ce que ces touches (143) sont disposées de manière que le plan bissecteur du dièdre, dont le sommet est l'axe géométrique d'usinage (20) et dont les faces passent par les points de contact des touches (143) avec la pièce à usiner, contient pratiquement la résultante des efforts d'usinage.

8. Dispositif selon l'une quelconque des revendication précédentes, caractérisé en ce que ces vérins (145, 146) sont branchés en parallèle sur cet accumulateur (401).

9. Dispositif selon l'une quelconque des revendications précédentes, caractérisé en ce que ces touches (143) sont en matière plastique à base de polyamide.

10. Dispositif selon l'une quelconque des revendications 1 à 9, caractérisé en ce que la lunette (140) est solidaire du porte-meule (130).

11. Application d'un dispositif selon l'une quelconque des revendications qui précèdent à une rectifieuse (100) cylindrique extérieure comprenant un banc (101) équipé d'une poupée fixe porte pièce ou d'entrainement (110) munie d'un mandrin (111) et d'une broche dont le nez porte une pointe (112), d'une poupée mobile (120) munie d'une contrepointe mobile (122), un porte-meule (130) mobile relativement au banc et muni d'une meule (131), l'axe (20) pointe/contre-pointe constituant l'axe géométrique d'usinage (20) de la pièce à usiner.

12. Application selon la revendication 11, où le bras (142) constitué par la tige (148) du piston est orienté de manière que son axe passe par l'axe géométrique (20) pointe/contre-pointe et l'axe de rotation (132) de la meule (131) et soit perpendiculaire à ceux-ci.

13. Application selon l'une des revendications 11 et 12, où la lunette (140) est une lunette à suivre solidaire du porte-meule (130).

14. Application selon l'une quelconque des revendications 11 à 13, où le mandrin (111) est monté flottant.

15. Application selon l'une quelconque des revendications 11 à 14, où le porte-meule (130) est équipé d'au moins un palpeur de mesure de cote (133).

16. Application selon d'une quelconque des revendications 11 à 15, où un automate de chargement/déchargement (200) comprend une surface de stockage (210) pour recevoir les pièces (10) à usiner et les pièces usinées, un transporteur (220) constitué d'un chariot (221) monté mobile sur une poutre (222) sur laquelle il se déplace en translation et portant deux manipulateurs (223) à vérin (224) mobiles axialement qui sont montées inclinées relativement l'un à l'autre de manière qu'en position chargement/déchargement de la rectifieuse, leurs axes respectifs (225) passent par l'axe géométrique (20) point/contre-pointe et qui sont munis de mors (226) préhensibles oscillants autocentreurs en forme de Vé.

17. Application selon la revendication 16, où les manipulateurs (223) sont montés flottants sur leur chariot (221) de manière à pouvoir basculer dans un plan passant par l'axe géométrique (20) point/contre pointe.

18. Application selon l'une quelconque des revendications 11 à 17, où le fonctionnement et l'enchaînement des phases et processus opératoires sont commandés et surveillés par un calculateur programmable.

19. Application selon l'une quelquonque des revendications 11 à 18, pour la rectification de cylindres de laminoir.

# FIG.1

## FIG.2

0262039

**FIG.3**

**FIG.5**

0262039

# FIG.4

0262039

FIG.6A

FIG.6B

FIG.6C

0262039

# FIG.6 D

# FIG.6 E

0262039

FIG. 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 427 755 (G.N. LEVESQUE et al.)<br>* Figures 1,4; résumé *<br>--- | 1,11 | B 24 B 41/06<br>B 24 B 41/00 |
| A | US-A-1 885 233 (R.A. COLE)<br>* Figure 1 *<br>--- | 2,4-7,<br>12 | |
| A | FR-A-2 351 888 (HOESCH WERKE)<br>* Revendications; figures *<br>--- | 16-19 | |
| A | DE-B-1 237 005 (G. BURGHARDT)<br>* Revendications; figures *<br>--- | 16-18 | |
| A | US-A-2 086 024 (C.G. FLYGARE)<br>--- | | |
| A | US-A-3 427 762 (J.P. MILLS)<br>--- | | |
| A | FR-A-2 046 403 (H.A. WALDRICH)<br>----- | | |

**DOMAINES TECHNIQUES RECHERCHES (Int. Cl.4)**

B 24 B

Le présent rapport a été établi pour toutes les revendications

| Lieu de la recherche | Date d'achèvement de la recherche | Examinateur |
|---|---|---|
| LA HAYE | 09-12-1987 | ESCHBACH D.P.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P0402)